# EUROPEAN PATENT APPLICATION

(11) **EP 4 190 664 A1**
(43) Date of publication of application: **07.06.2023**
(21) Application number: 21857399.6
(22) Date of filing: 08.07.2021
(51) Int. Cl.: B61D 27/00

(54) **AIR CONDITIONING DUCT FOR RAIL TRANSIT VEHICLE**

(30) Priority: 21.08.2020 CN 202010851983
(71) Applicant: CRRC Zhuzhou Locomotive Co., Ltd., Zhuzhou, Hunan 412001 (CN)
(72) Inventor: LIU, Zhiyuan, Zhuzhou, Hunan 412001 (CN); MAO, Yejun, Zhuzhou, Hunan 412001 (CN); DING, Qianzhaung, Zhuzhou, Hunan 412001 (CN); XIAO, Fengmin, Zhuzhou, Hunan 412001 (CN); YANG, Tianzhi, Zhuzhou, Hunan 412001 (CN); LI, Hang, Zhuzhou, Hunan 412001 (CN)
(74) Representative: Kramer Barske Schmidtchen Patentanwälte PartG mbB
(86) International application number: PCT/CN2021/105149
(87) International publication number: WO 2022/037304

(57) **Abstract**

An air conditioning duct for a rail transit vehicle, comprising a first duct (3) and a second duct (6) mounted in sequence on the top of a vehicle passenger compartment, the first duct (3) and the second duct (6) respectively being connected to an air supply port of an air conditioning unit by means of a distribution box (4), an inner cavity of the first duct being divided into a first dynamic pressure cavity (35) and a first static pressure cavity (31) by a first partition plate (34), an inner cavity of the second duct being divided into a second dynamic pressure cavity (65) and a second static pressure cavity (63) by a second partition plate (66), the cross-sectional area of the first dynamic pressure cavity (35) and the second dynamic pressure cavity (65) gradually decreasing along the air flow direction, and the cross-sectional area of the first static pressure cavity (31) and the second static pressure cavity gradually increasing along the air flow direction. The present air conditioning duct increases the uniformity of the passenger compartment air flow organisation and also reduces the noise in the passenger compartment, on the whole increasing the comfort of the passengers travelling in the passenger compartment.

## Description

### FIELD OF THE INVENTION

The present invention relates to ventilation equipment for rail passenger cars, in particular to an air conditioning duct for a rail transit vehicle.

### BACKGROUND OF THE INVENTION

How to reduce airflow noise in an air conditioning duct, as an indispensable connecting component between an air conditioning unit and a passenger compartment of a rail transit vehicle, and how to reduce noise of the air conditioning unit entering the passenger compartment by using the air conditioning duct and at the same time improve air supply uniformity at an air outlet of the air conditioning duct, have put forward higher requirements for the structural design of the air conditioning duct.

At present, due to the limited internal space of the rail vehicle in use, the air conditioning duct is very close to an air outlet roof of the passenger compartment, and the noise in the passenger compartment is high. In addition, there are some problems, such as non-uniform air distribution in the passenger compartment and large temperature difference in different areas of the passenger compartment. In view of the problem of high noise entering the passenger compartment from the air conditioning duct, the commonly used way is to stick sound-absorbing cotton inside the duct. However, the thickness of the sound-absorbing cotton is generally more than 10 mm, which reduces the air supply section and increases the flow rate to a certain extent, resulting in a slight increase in noise. In addition, the sound-absorbing cotton has a good absorption effect on high-frequency noise, but poor absorption effect on low-frequency noise from the air conditioning unit.

Chinese patent CN203888808U discloses a static pressure duct for an urban rail vehicle, which directly supplies air to a passenger compartment by means of a main duct connected to an air supply port, and cannot isolate noise caused by air flow pressure, and in which noise is reduced by means of sound-absorbing cotton, leading to the above-mentioned problem of poor sound absorption effect.

Chinese patent CN207631255U discloses an air supply channel of an air conditioner for a rail transit vehicle, where air-conditioning air flows into a static pressure cavity through a dynamic pressure cavity and then flows into a passenger compartment through an air supply hole formed on the static pressure cavity. However, the dynamic pressure cavity is arranged above the static pressure cavity, and the static pressure cavity spans the roof, so that the air flow near an air supply port of an air conditioning unit is relatively high, and a little air-conditioning air is supplied to the passenger compartment through the static pressure cavity, which will affect the comfort of passengers under the air conditioning unit.

Chinese patent application CN111361582A discloses a low-noise air conditioning duct for a rail vehicle, where an air conditioning unit directly supplies air to two ends of the duct, the air-conditioning air flows into a static pressure cavity through a dynamic pressure cavity and then flows into a passenger compartment through an air supply hole formed on the static pressure cavity. Because the cross sections of the dynamic pressure cavity and the static pressure cavity do not change with an air flow direction, the air flow rate near an air supply port of the air conditioning unit is relatively high, but a little air-conditioning air is supplied to the passenger compartment through the static pressure cavity, which affects the comfort of passengers under the air conditioning unit.

### SUMMARY OF THE INVENTION

The technical problem to be solved by the present invention is to provide an air conditioning duct for a rail transit vehicle, which can increase the uniformity of air supply in a passenger compartment and greatly improve the comfort of passengers in the passenger compartment, aiming at the shortcomings of non-uniform air supply and high noise of an existing air conditioning duct for a rail vehicle.

To solve the above technical problems, an air conditioning duct for a rail vehicle, provided by the present invention, includes a first duct and a second duct mounted in sequence on the top of a vehicle passenger compartment,the first duct and the second duct are connected to an air supply port of an air conditioning unit by means of a distribution box respectively, an inner cavity of the first duct is partitioned into a first dynamic pressure cavity and a first static pressure cavity by a first partition plate, an inner cavity of the second duct is partitioned into a second dynamic pressure cavity and a second static pressure cavity by a second partition plate, the cross-sectional areas of the first dynamic pressure cavity and the second dynamic pressure cavity decrease gradually along an air flow direction, and the cross-sectional areas of the first static pressure cavity and the second static pressure cavity increase gradually along the air flow direction.

The inventors of the present invention found by research that the air flows forward at high-speed under the action of dynamic pressure, so that a little air flows to the first and second static pressure cavities through air passing holesnear air inlets of the first and second dynamic pressure cavities. Therefore, the cross-sectional areas of the first dynamic pressure cavity and the second dynamic pressure cavity are designed to decrease gradually along the air flow direction, the cross-sectional areas of the first static pressure cavity and the second static pressure cavity are designed to increase gradually along the air flow direction, the static pressure at the air inlets of the first dynamic pressure cavity and the second dynamic pressure cavity increases, and more air flows into the static pressure cavitiesthrough air passing holes near air inlets of the first dynamic pressure cavity and the second dynamic pressure cavity, thereby improving the uniformity of air supply in the passenger compartment and greatly improving the comfort of passengers in the passenger compartment.

Preferably, a transition duct is arranged between the air conditioning unit and the distribution box, a micro-perforated plate is arranged on a windward surface of the transition duct, closely arranged micro-holes with a decimillimeter-scale diameter are distributed on the micro-perforated plate, and a certain air gap for absorbing low-frequency noise generated by a supply fan in the air conditioning unit exists between the micro-perforated plate and the windward surface of the transition duct. Preferably, an inner cavity of the distribution box is partitioned by a curved plate in a shape of λ into an upper flow channel connected with the first duct and a lower flow channel connected with the second duct, which not only optimizes an air flow channel, but also reduces air vortex noise,and the mounting position of the end of the curved plate towards an air inlet of the distribution box is adjustable: when the flow rate of air-conditioning air in the first duct is low, the curved plate rotates downward to a first position that meets the air flow rate requirement of the first duct; otherwise, the curved plate rotates upward to a second position.

Preferably, a first cavity is formed between the upper flow channel and the lower flow channel, a second cavity is formed between an inlet end and an outlet end of the lower flow channel, closely arranged holes are formed on windward surfaces of the first cavity and the second cavity, and sound-absorbing cotton is pasted on back surfaces of the windward surfaces of the first cavity and the second cavity, thereby greatly reducing high- and low-frequency noise of the air conditioning unit.

Preferably, a plurality of thin-walled balls with micro-holes on surfaces are placed in the first cavity and the second cavity, such that the first cavity and the second cavity form silencing cavities to reduce noise of an air conditioning and ventilation system; and a cross, hollow-square or arc-shaped silencer is arranged in a return airport of the distribution box to further reduce the high- and low-frequency noise.

Preferably, a spoiler is arranged in the first dynamic pressure cavity, the first static pressure cavity, the second dynamic pressure cavity and the second static pressure cavity respectively to ensure the air supply uniformity of the air conditioning duct. Preferably, the first partition plate and the second partition plate are provided with air passing holes respectively, and the opening size of the air passing holes decreases gradually along the air flow direction to further ensure the air supply uniformity of the air conditioning duct.

Preferably, a tail end of the first duct is connected to a cab ventilation unit by a soft duct, so as to deliver air supplied by the air conditioning unit to a cab conveniently to increase the comfort of drivers and passengers; and the air supply volume and air supply temperature of the cab ventilation unit can be adjusted according to the comfort demand of the cab.

In order to further improve the comfort of passengers, the first and second dynamic pressure cavities are arranged at the middle part of a roof, and the first and second static pressure cavities are symmetrically arranged on two sides of the first and second dynamic pressure cavities, so that air-conditioning air can be supplied from passenger seat areas on two sides of the passenger compartment.

Compared with the prior art, the beneficial effects of the present invention are as follows:
1. In the present invention, a micro-perforated plate is used in the transition duct to absorb noise, and sound-absorbing cotton and sound-absorbing hollow thin-walled balls are used in the distribution box to absorb noise, which not only reduce fan blade noise of the supply fan of the air conditioning unit, but also reduce the generation of airflow noise and vortex noise in the duct.
2. The mounting angles of the partition plates in the dynamic and static pressure cavities and the structure of the air passing holes on the partition plates are optimized (decreasing gradually along the air flow direction), so that the duct have better air supply uniformity.
3. The cross-sectional areas of the first and second dynamic pressure cavities decrease gradually along the air flow direction, while the cross-sectional areas of the first and second static pressure cavities increase gradually along the air flow direction, thereby improving the uniformity of air supply in the duct.

In brief, the air conditioning duct provided by the present invention increases the uniformity of air distribution in the passenger compartment and also reduces the noise in the passenger compartment, on the whole increasing the comfort of passengers in the passenger compartment.

### BRIEF DESCRIPTION OF THE DRAWINGS

In order to describe the technical solutions in the embodiments of the present invention or in the prior art more clearly, the following briefly introduces the accompanying drawings required in the description of the embodiments or the prior art. Apparently, the accompanying drawings in the following description show some embodiments of the present invention, and a person of ordinary skill in the art may still derive other drawings from these drawings without any creative effort.
FIG. 1 is a three-dimensional structure diagram of an air conditioning duct for a rail transit vehicle according to the present invention;
FIG. 2 is a longitudinal horizontal cross-sectional structure diagram of a first duct, a distribution box and a second duct of the air conditioning duct for a rail transit vehicle according to the present invention, where arrows indicate air flow directions;
FIG. 3 is a structure diagram of a first partition plate of the present invention;
FIG. 4 is a side structure diagram of the distribution box of the present invention; and
FIG. 5 is a cross-sectional view taken along line A-A in FIG. 4.

In the figures: 1 - cab ventilation unit, 2 - soft duct, 3 - first duct, 31 - first static pressure cavity, 32 - first platewith uniformly distributed holes, 33 - spoiler, 34 - first partition plate, 341 - air passing hole, 35 - first dynamic pressure cavity, 36 - spoiler, 4 - distribution box, 41 - return air port, 42 - upper flow channel, 43 - lower flow channel, 44 - curved plate, 441 - first position, 442 - second position, 45 - first cavity, 46 - second cavity, 47 - ball, 48 - air inlet, 49 - silencer, 5 - transition duct, 6 - second duct, 61 - second platewith uniformly distributed holes, 62 - spoiler, 63 - second static pressure cavity, 64 - spoiler, 65 - second dynamic pressure cavity, 66 - second partition plate, 7 - first mounting seat, 8 - second mounting seat, 9 - third mounting seat.

### DETAILED DESCRIPTION OF THE EMBODIMENTS

The present invention will be further described below with reference to specific preferred embodiments, but the scope of protection of the present invention is not limited thereby.

For the convenience of description, the relative positional relationships of components, such as upper, lower, left, and right, are described according to the layout directions of the drawings in the specification, and do not limit the structure of this patent.

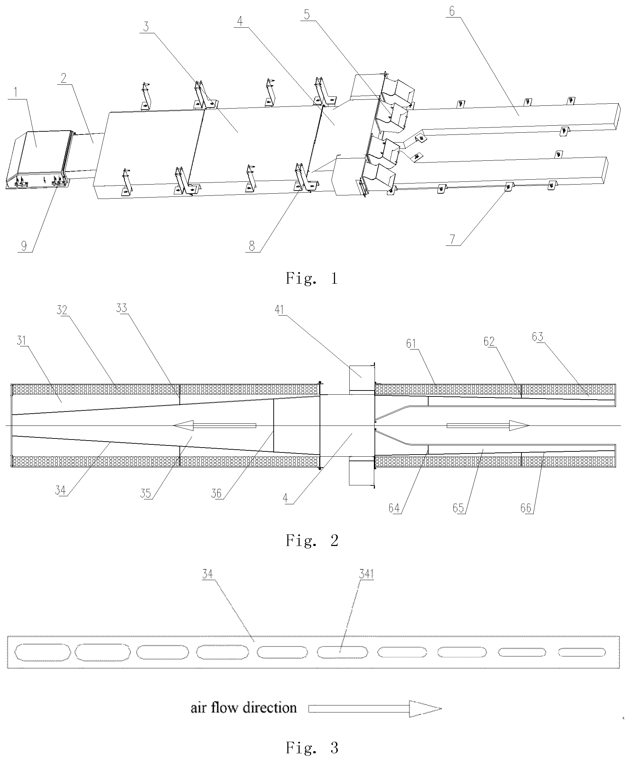

As shown in FIG. 1, an air conditioning duct for a rail transit vehicle in an embodiment includes a cab ventilation unit 1, a soft duct 2, a first duct 3, a distribution box 4, a transition duct 5, and a second duct 6. An air conditioning unit is mounted above the second duct 6, an air supply port of the air conditioning unit supplies air to the distribution box 4 through the transition duct 5, and the air enters the first duct 3 and the second duct 6 respectively after flow distribution by a curved plate 44 in the distribution box 4.

The whole air conditioning duct is hoisted on a roof of the vehicle by means of a first mounting seat 7, a second mounting seat 8, and a third mounting seat 9.

The cab ventilation unit 1 is connected with the first duct 3 by the soft duct 2, so as to deliver the air supplied by the air conditioning unit to a cab to increase the comfort of drivers and passengers; and the air supply volume and air supply temperature of the cab ventilation unit 1 can be adjusted according to the comfort demand of the cab.

As shown in FIG. 2, an inner cavity of the first duct 3 is partitioned into a first dynamic pressure cavity 35 and a first static pressure cavity 31 by a first partition plate 34, an inner cavity of the second duct 6 is partitioned into a second dynamic pressure cavity 65 and a second static pressure cavity 63 by a second partition plate 66, the cross-sectional areas of the first dynamic pressure cavity 35 and the second dynamic pressure cavity 65 decrease gradually along an air flow direction, and the cross-sectional areas of the first static pressure cavity 31 and the second static pressure cavity 63 increase gradually along the air flow direction. Spoilers 33, 36, 62 and 64 having appropriate hole areas are vertically arranged at certain positions in the first dynamic pressure cavity 35, the first static pressure cavity 31, the second dynamic pressure cavity 65 and the second static pressure cavity 63, so as to improve the air supply uniformity of the air conditioning duct in the length direction. Sound-absorbing cotton for absorbing high- and low-frequency noise is pasted on windward surfaces of the first partition plate 34 and the second partition plate 66, so as to provide a comfortable and low-noise environment for the passenger compartment. The air in the first static pressure cavity 31 is delivered to the passenger compartment by a first plate with uniformly distributed holes32, and the air in the second static pressure cavity 63 is delivered to the passenger compartment by a second plate with uniformly distributed holes61.

As shown in FIG. 3, the first partition plate 34 and the second partition plate 66 are provided with air passing holes 341 respectively, and the opening size of the air passing hole 341 decreasesgradually along the air flow direction, so as to ensure the air supply uniformity of the air conditioning duct. The air passing hole 341 are preferably kidney-shaped holes.

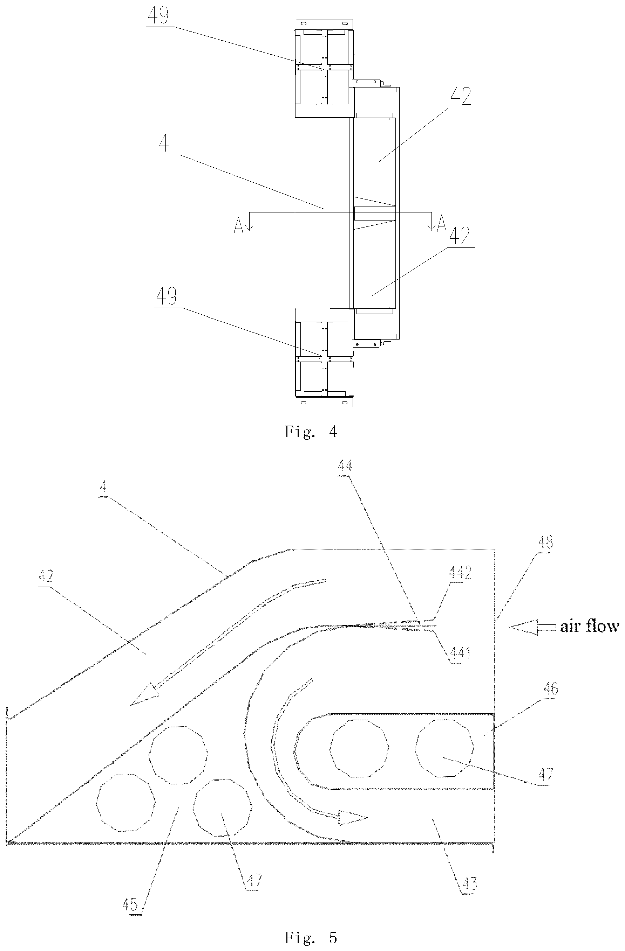

As shown in FIG. 4 and FIG. 5, an air inlet 48 of the distribution box 4 is connected to the air supply port of the air conditioning unit by two transition ducts 5, and a return air port 41 of the distribution box 4 is connected to a return air port of the air conditioning unit by other two transition ducts 5. A micro-perforated plate is pasted on a windward surface of the transition duct 5, closely arranged micro-holes with a decimillimeter-scale diameter are distributed on the micro-perforated plate, a certain air gap exists between the micro-perforated plate and the windward surface of the transition duct, and a cross, hollow-square or arc-shaped silencer 49 (as shown in FIG. 5) is arranged in the return air port 41 to absorb low-frequency noise generated by a supply fan in the air conditioning unit.

An inner cavity of the distribution box 4 is partitioned by a curved plate 44 in a shape of λ into an upper flow channel 42 connected with the first duct 3 and a lower flow channel 43 connected with the second duct 6, and the mounting position of the end of the curved plate 44 towards the air inlet 48 of the distribution box 4 is adjustable. When the flow rate of air-conditioning air in the first duct 3 is low, the curved plate 44 rotates downward toward a first position 441 until the air flow rate requirement of the first duct 3 is met; otherwise, the curved plate 44 rotates upward toward a second position 442.

A first cavity 45 is enclosed between the upper flow channel 42 and the lower flow channel 43 by the curved plate 44 and a bottom plate of the distribution box 4, a second cavity 46 is enclosed between an inlet end and an outlet end of the lower flow channel 43, closely arranged holes are formed on windward surfaces of the first cavity 45 and the second cavity 46, sound-absorbing cotton is pasted on back surfaces of the windward surfaces of the first cavity 45 and the second cavity 46, and at the same time, a plurality of thin-walled balls 47 with micro-holes on surfaces are placed in the first cavity 45 and the second cavity 46. The sound-absorbing cotton, the balls 47, and the holes on the first cavity 45 and the second cavity 46 are used together to improve the noise absorption effect, thereby achieving the purpose of reducing high-frequency aerodynamic noise and vortex noise in the duct.

When the air conditioning duct for a rail transit vehicle is used, after the air supplied by the air conditioning unit is distributed by the curved plate 44 in the distribution box 4, a portion of the air enters the first dynamic pressure cavity 35 of the first duct 3 through the upper flow channel 42, the other portion of the air enters the second dynamic pressure cavity 65 of the second duct 6 through the lower flow channel 43, and then the air enters the first and second static pressure cavities 31 and 63 through the air passing holes 341 on the first and second partition plates 34 and 66 under the action of static pressure in the first and second dynamic pressure cavities 35 and 65, and is delivered to the passenger compartment through the first platewith uniformly distributed holes 32 and the second platewith uniformly distributed holes 61 arranged at the bottoms of the first and second static pressure cavities 31 and 63. Return air from the passenger compartment is delivered to the return air port of the air conditioning unit through the return air port 41 of the distribution box 4.

The forgoing descriptions are only preferred embodiments of the present application, and do not limit the present application in any form. Although the present application is disclosed above with the preferred embodiments, the present application is not limited thereto. Some variations or modifications made by any skilled person familiar with the art using the disclosed technical contents without departing from the scope of the technical solution of the present application are equivalent to the embodiments, and all fall within the scope of the technical solution.

## Claims

1. An air conditioning duct for a rail transit vehicle, comprising a first duct (3) and a second duct (6) mounted in sequence on the top of a vehicle passenger compartment, wherein the first duct and the second duct are connected to an air supply port of an air conditioning unit by means of a distribution box (4) respectively; an inner cavity of the first duct is partitioned into a first dynamic pressure cavity (35) and a first static pressure cavity (31) by a first partition plate (34), an inner cavity of the second duct is partitioned into a second dynamic pressure cavity (65) and a second static pressure cavity (63) by a second partition plate (66); the cross-sectional areas of the first dynamic pressure cavity and the second dynamic pressure cavity decrease gradually along an air flow direction, and the cross-sectional areas of the first static pressure cavity and the second static pressure cavity increase gradually along the air flow direction.

2. The air conditioning duct for a rail transit vehicle according to claim 1, wherein a transition duct (5) is arranged between the air conditioning unit and the distribution box, a micro-perforated plate for absorbing low-frequency noise of the air conditioning unit is arranged on a windward surface of the transition duct, closely arranged micro-holes with a decimillimeter-scale diameter are distributed on the micro-perforated plate, and an air gap is formed between the micro-perforated plate and the windward surface of the transition duct.

3. The air conditioning duct for a rail transit vehicle according to claim 1, wherein an inner cavity of the distribution box is partitioned by an curved plate (44) in a shape of λ into an upper flow channel (42) connected with the first duct and a lower flow channel (43) connected with the second duct, and the mounting position of the end of the curved plate towards an air inlet of the distribution box is adjustable: when the flow rate of air-conditioning air in the first duct is low, the curved plate rotates downward to a first position (441) that meets the air flow raterequirement of the first duct; otherwise, the curved plate rotates upward to a second position (442).

4. The air conditioning duct for a rail transit vehicle according to claim 3, wherein a first cavity (45) is formed between the upper flow channel and the lower flow channel, a second cavity (46) is formed between an inlet end and an outlet end of the lower flow channel, closely arranged holes are formed on windward surfaces of the first cavity and the second cavity, and sound-absorbing cotton is pasted on back surfaces of the windward surfaces of the first cavity and the second cavity.

5. The air conditioning duct for a rail transit vehicle according to claim 4, wherein a plurality of thin-walled balls (47) with micro-holes on surfaces are placed in the first cavity and the second cavity to form silencing cavities, and a cross, hollow-square or arc-shaped silencer is arranged in a return air port of the distribution box.

6. The air conditioning duct for a rail transit vehicle according to claim 1, wherein a spoiler is arranged in the first dynamic pressure cavity, the first static pressure cavity, the second dynamic pressure cavity and the second static pressure cavity respectively.

7. The air conditioning duct for a rail transit vehicle according to claim 1, wherein the first partition plate and the second partition plate are provided with air passing holes respectively, and the opening size of the air passing hole decreases gradually along the air flow direction.

8. The air conditioning duct for a rail transit vehicle according to claim 1, wherein a tail end of the first duct is connected to a cab ventilation unit (1) by a soft duct (2).
